Europäisches Patentamt

European Patent Office

Office européen des brevets

(11) Publication number: **0 199 284 B1**

(12) **EUROPEAN PATENT SPECIFICATION**

(45) Date of publication of patent specification: **10.07.91**   (51) Int. Cl.⁵: **D06F 37/30**

(21) Application number: **86105288.4**

(22) Date of filing: **16.04.86**

(54) Motor control device in a landry washing machine.

(30) Priority: **19.04.85 IT 4571485**

(43) Date of publication of application:
**29.10.86 Bulletin 86/44**

(45) Publication of the grant of the patent:
**10.07.91 Bulletin 91/28**

(84) Designated Contracting States:
**AT BE CH DE FR GB IT LI LU NL SE**

(56) References cited:
**DE-A- 1 965 085**
**FR-A- 2 296 720**
**FR-A- 2 501 736**

(73) Proprietor: **INDUSTRIE ZANUSSI S.p.A.**
**Via Giardini Cattaneo 3 C.P. 147**
**I-33170 Pordenone(IT)**

(72) Inventor: **Bergamo, Luigi**
**Via della Chiesa 33/A**
**I-33170 Pordenone(IT)**
Inventor: **Nodassi, Francesco**
**Via Cavour 8**
**I-33080 Porcia (Pordenone)(IT)**

(74) Representative: **Patentanwälte Grünecker,**
**Kinkeldey, Stockmair & Partner**
**Maximilianstrasse 58**
**W-8000 München 22(DE)**

## Description

The present invention relates to a device for controlling the electric motor employed for rotating the drum of a laundry washing machine of the domestic type at different operating speeds.

As generally known, machines of this kind are generally composed of a housing and a laundering assembly suspended therein by means of springs and vibration dampeners.

The laundering assembly comprises a tub surrounding a rotatable drum for containing therein the laundry to be washed.

The drum is rotated at different operating speeds, namely, at a low speed during the laundering phases, and a high speed during the centrifuging phases, by the action of a motor under the control of the program timing unit of the machine.

When advancing from the lower washing speed to the higher centrifuging speed it may happen, particularly in the case of a reduced laundry charge, that the laundry assumes an out-of-balance distribution within the drum.

As a result, on initiation of the centrifuging phase there occurs a considerable unbalance leading to strong oscillations of the laundering assembly, which cannot be completely absorbed by the suspension and vibration dampening system of the machine and are therefore partially transmitted to the housing, resulting in undesirable and harmful jumping and knocking.

To avoid these undesirable phenomena, solutions have already been proposed which provide that the drum is accelerated to the centrifuging speed by passing through a phase of an intermediate speed between that of the washing phase and that of the centrifuging phase. (FR-A- 2 501 736)

These solutions are only applicable, however, when employing an electronically controlled motor, such as an induction motor, a universal motor, a DC motor, a brushless motor etc.

In each case, the results of this procedure depend on numerous variables, such as the presence or absence of water in the tub, and above all, on the quantity of laundry contained in the drum.

These solutions are thus rather critical and permit satisfactory results to be achieved only under particular conditions.

A main object of the invention is to control the motor for rotating the drum of a laundry washing machine in a manner ensuring a correct distribution of the laundry within the drum by taking preparatory action during the final phase of the drum movement at low speed preceding the centrifuging phase.

In contrast to the effects brought about by previously known solutions, it is intended to avoid the formation of a disequilibrium instead of attenuating the effects thereof after they have developed.

A further object of the invention is to render the dimensioning of the suspension and vibration dampening elements of the laundering assembly less critical while at the same time improving the stability of the machine; in particular, it is intended to reduce the mass of the counterweights provided in each laundry washing machine, or at least to eliminate the necessity of the upper counterweight in a laundry washing machine additionally provided with a forward counterweight.

The proposed solution should finally be applicable to motors of any type, be they electronically controlled or not; this solution should obviously be applicable above all to asynchronous motors, as this type of motor is preferably employed for reasons of economy and reliability.

All these objects are attained in a laundry washing machine having a drum rotated by an electric motor provided with a speed control device and controlled by a program timing unit determining the washing and centrifuging phases, such machine being characterized in that the motor speed control device comprises actuator means adapted during a period of time immediately preceding each centrifuging phase to select a speed lower then that corresponding to the rotational speed of the drum during the washing phase.

The characteristics of the invention will become evident from the following description, given by way of example with reference to the accompanying drawings, wherein:

figs. 1 and 2   show circuit diagrams of a control device for an asynchronous motor according to two embodiments of the invention,

fig. 3   shows a circuit diagram of a control device according to the invention for a universal motor, and

figs. 4 and 5   show rotational speed diagrams of the drum of a laundry washing machine having a motor provided with a control device as shown in figs. 1 and 2.

The invention is based on the results of an extended series of experiments which have demonstrated the existence of a clearly defined and limited drum speed range within which there occurs a uniform distribution of the laundry along the walls of the drum so as to avoid any disequilibrium on initiation of the centrifuging phase.

This speed range depends in particular on the diameter and the depth of the drum, and to a lesser degree, on other variables such as the arrangement and the shape of the elevating or agitator elements within the drum.

It has surprisingly been found that the speed range under discussion, although varying for drums having different characteristics, always lies below the specific laundering speed of the drums of any type.

Merely by way of example, for a drum having a diameter of 45 cm and a depth of 28 cm, the speed range for preconditioning the laundry so as to avoid a disequilibrium on initiation of the centrifuging phase lies between 46 and 52 rpm, while the respective optimum laundering speed lies between 55 and 60 rpm.

For enabling the experimental results to be industrially exploited and the stated object to be thus achieved, a motor control device has been studied which would permit the rotational speed of the drum to be reduced at precisely defined points of time of the various operating cycles of a laundry washing machine.

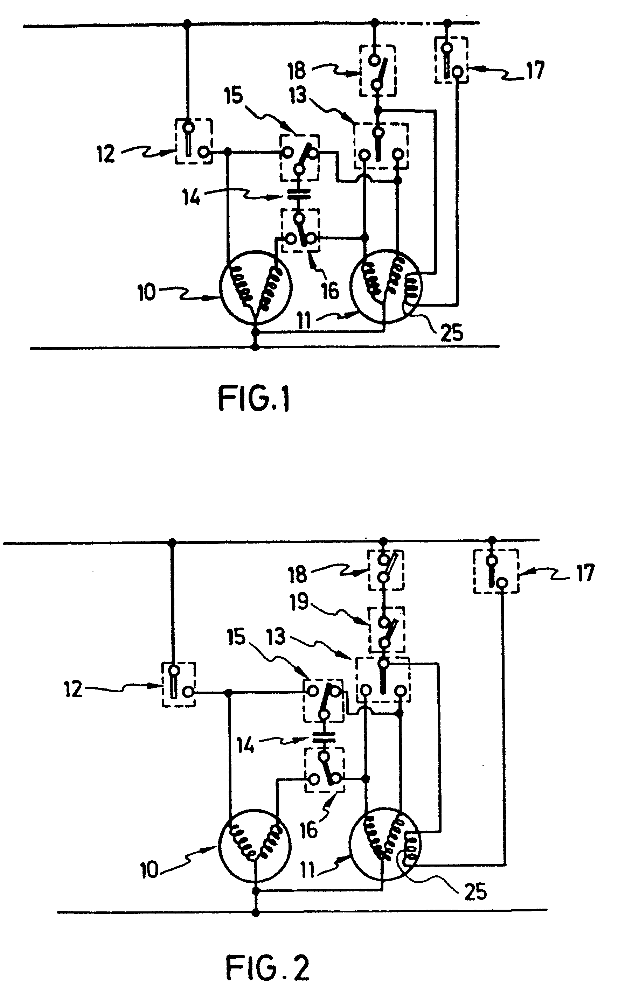

With reference to fig. 1, there is shown a circuit diagram of a laundry washing machine having a asynchronous motor of the plural winding monophase current supply type. The windings are diagrammatically shown separate from one another and include a winding section 10 for the centrifuging speed and a substantially Y-connected winding section 11 for the laundering speed.

Winding section 11 of the motor is preferably designed in a per se known manner to include a phase or winding portion 25 which is magnetically coupled, but electrically separate, to or from, respectively the remaining windings of section 11.

Winding section 10 is connected to the electric supply circuit through a breaker switch 12 controlled by an associated cam of the program timing unit (not shown). In a similar manner, winding section 11 is connected to the supply circuit through a twin contact (inverter) switch 13 for rotating the drum in alternating directions.

The motor described is provided with a phase shift capacitor 14 connected between two commutator switches 15 and 16. The separate phase or part 25 of winding section 11 is connected between inverter switch 13 and the supply circuit through a breaker switch 17.

According to the invention, the control circuit of motor 10, 11 comprises a breaker switch 18 connected in series with a part of the winding section 11 for the laundering speed. Breaker switch 18 is actuated by an associated slow cam of the program timing unit to close only during the water discharge phase when this phase immediately precedes a centrifuging phase.

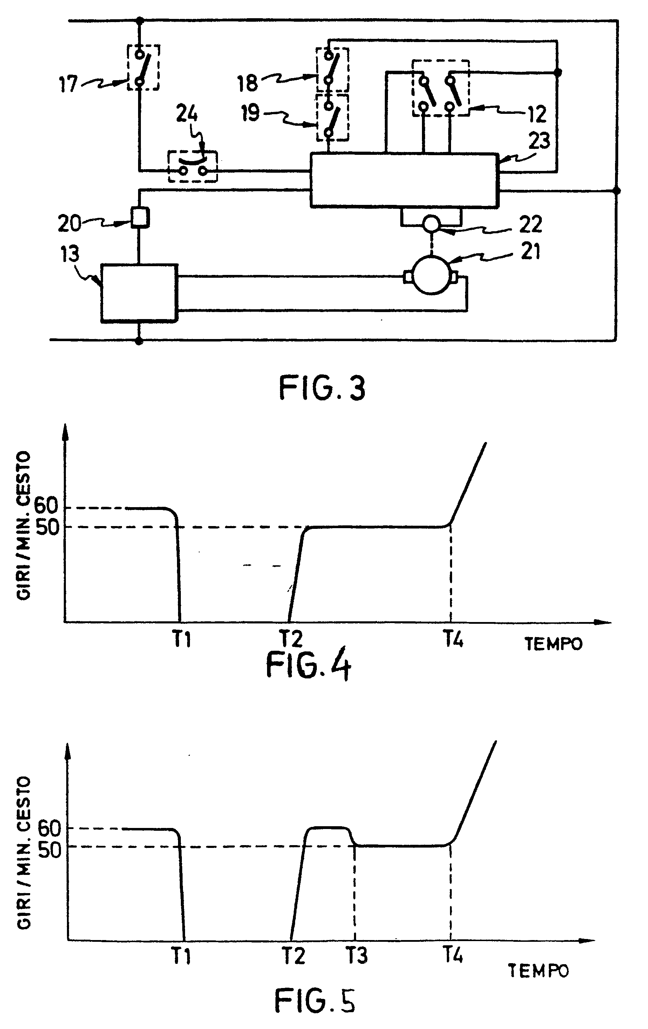

With reference to figs. 1 and 4, during the laundering phase (up to the time T1) breaker switches 12 and 18 are open, while breaker switch 17 is closed. As a result, the three windings of motor winding section 11 are supplied with current through inverter switch 13. This causes the drum to be rotated at the laundering speed of about 60 rpm. At the time T1, inverter switch 13 is brought to its neutral center position (as shown in fig. 1), whereby the drum is stopped, while the discharge of water from the machine is initiated in the per se known and therefore not described manner.

At the time T2 breaker switch 18 is closed, and inverter switch 13 is again actuated, so that winding 25 of section 11 is short-circuited through breaker switches 17 and 18. As a result, only the remaining two windings of section 11 are energized, so that the drum is rotated at a speed of about 50 rpm, which is lower than the laundering speed.

This condition is maintained up to a time T3, when breaker switches 17 and 18 are opened, and breaker switch 12 is closed for initiating the centrifuging phase by energizing winding section 10 of the motor, while commutator switches 15 and 16 are actuated to separate capacitor 14 from section 11 and to connect it to winding section 10.

During this phase the laundry distributes itself uniformly along the internal wall of the drum. The drum may thus be accelerated to the high rotational speed required without the formation of out-of-balance accumulations of the laundry and the resulting undesirable phenomena described in the introduction of the description.

Preferably as shown in fig. 2, a further breaker switch 19 is connected in series between breaker switch 18 and laundering winding section 11 of the motor. Breaker switch 19 is actuated by a fast cam of the program timing unit so as to be closed only for the final part of the laundering speed rotation of the motor preceding the centrifuging phase.

In this case, and also with reference to the diagram of fig. 5, the laundering phase also terminates at the time T1 and is followed by a water discharge phase T1-T4, with the drum being kept stationary during a first period T1-T2. Subsequently breaker switch 17 is closed at the time T2, whereby the drum is again rotated at 60 rpm. The simultaneous closing of breaker switch 18 has no effect, as breaker switch 19 remains open.

During the last period T3-T4 of the discharge phase breaker switch 19 is closed, so that the rotational speed of the drum is reduced to 50 rpm by short-circuiting winding 25 of motor winding section 11 as in the embodiment described above. This causes the laundry to be again uniformly distributed along the wall of the drum, so that at the time T4 breaker switch may be closed to accelerate the drum to the centrifuging speed without inconvenience.

The embodiment of fig. 2 facilitates the renewed starting of the motor, since at the time T2 all three windings of laundering winding section 11 are energized.

With reference now to fig. 3, there is shown a circuit diagram of a laundry washing machine equipped with a universal motor the field winding and secondary winding of which are diagrammatically indicated at 20 and 21, respectively.

The motor is connected through an inverter 13 and a tachimetric generator 22 to an electronic control device 23 of a per se known type for controlling the motor speed.

The circuit additionally includes a switch 12 for selecting the respective laundering and centrifuging speeds, a breaker switch 17 for the energization of the control device and of the motor itself, breaker switches 18 and 19, and a motor protection switch 24.

In this embodiment breaker switches 18 and 19 are likewise controlled by the cams of an electromechanic program timing unit in the same manner as described above with reference to fig. 2 so as to achieve corresponding results and to thereby attain the stated objects.

In the case of a laundry washing machine controlled by an electronic program timing unit, breaker switches 18 and 19 may obviously be replaced by electronic switch elements which may be included in the logic circuit of the program timing unit. It is also possible to provide only one of breaker switches 18 or 19 which may then be actuated to close only at the time T3 as explained above.

Thus the actuator means for reducing the motor speed may be of a different type, or breaker switches 18 and 19 may be designed to deactivate winding portion 25 by interrupting its supply circuit instead of short-circuiting the winding portion.

## Claims

1. A laundry washing machine having a drum rotated by an electric motor provided with a speed control device and controlled by a program timing unit determining the washing and centrifuging phases, characterized in that said motor speed control device comprises actuator means (18) adapted during a period of time immediately preceding each centrifuging phase to select a speed lower than the one corresponding to the rotational speed of said drum during the washing phase.

2. A laundry washing machine according to claim 1, wherein said electric motor is an asynchronous motor having low-speed windings for the washing phase and high-speed windings for the centrifuging phase, characterized in that said actuator means comprise at least one breaker switch (18) actuated by said program timing unit for disconnecting a part (25) of said motor windings (11) for the washing speed.

3. A laundry washing machine according to claim 2, characterized in that said breaker switch (18) is adapted to short-circuit said part (25) of said windings (11).

4. A laundry washing machine according to claim 2, characterized in that said motor control device comprises, in series with said breaker switch (18), a further breaker switch (19) controlled by said program timing unit and adapted to be closed in a final stage of said period of time immediately preceding each centrifuging phase.

5. A laundry washing machine according to claim 4, wherein said electric motor is of the single phase type, characterized in that said breaker switches (18, 19) are inserted in the motor control device so as to isolate a part of the winding of the motor.

6. A laundry washing machine according to claim 4, wherein said electric motor is of the universal type, and said program timing unit is of the electronic type, characterized in that said breaker switches (18, 19) are electronic switching elements preferably inserted in the logic circuit of said electronic program timing unit.

## Revendications

1. Machine à laver le linge ayant un tambour entraîné en rotation par un moteur électrique équipé d'un dispositif de commande de vitesse et commandé par un programmateur déterminant les phases de lavage et de centrifugation, caractérisée en ce que le dispositif de commande de la vitesse du moteur comporte des moyens d'actionnement (18) adaptés, pendant une période précédant immédiatement chaque phase de centrifugation, pour sélectionner une vitesse inférieure à celle correspondant à la vitesse de rotation du tambour pendant la phase de lavage.

2. Machine à laver le linge selon la revendication 1, dans laquelle le moteur électrique est un moteur asynchrone ayant des enroulements basse vitesse pour la phase de lavage et des enroulements vitesse élevée pour la phase de centrifugation, caractérisée en ce que les moyens d'actionnement comprennent au moins un rupteur (18) actionné par le programmateur pour déconnecter une partie (25) des enroulements de moteur (11) pour la vitesse de lavage.

3. Machine à laver le linge selon la revendication 2, caractérisée en ce que le rupteur (18) est adapté pour court-circuiter cette partie (25) des enroulements (11).

4. Machine à laver le linge selon la revendication 2, caractérisée en ce que le dispositif de commande du moteur compporte, monté en série avec le rupteur (18), un autre rupteur (19) commandé par le programmateur et adapté pour être fermé dans un stade final de la période précédant immédiatement chaque phase de centrifugation.

5. Machine à laver le linge selon la revendication 4, dans laquelle le moteur électrique est monophasé, caractérisée en ce que les rupteurs (18,19) sont introduits dans le dispositif de commande du moteur de façon à isoler une partie de l'enroulement du moteur.

6. Machine à laver le linge selon la revendication 4, dans laquelle le moteur électrique est du type universel et le programmateur est du type électronique, caractérisée en ce que les rupteurs (18,19) sont des éléments de coupure électronique, de préférence introduits dans le circuit logique du programmateur électronique.

**Ansprüche**

1. Waschmaschine mit einer Trommel, die von einem Elektromotor gedreht wird, der mit einer Drehzahlsteuervorrichtung versehen wird und von einer Programmeinheit gesteuert wird, die die Wasch- und Schleuderphasen bestimmt, **dadurch gekennzeichnet,** daß die Motordrehzahlsteuervorrichtung eine Betätigungseinrichtung (18) enthält, die dazu eingerichtet ist, während eines Zeitabschnitts, der jeder Schleuerphase unmittelbar vorangeht, eine Drehzahl auszuwählen, die niedriger als diejenige ist, die der Drehzahl der Trommel während der Waschphase entspricht.

2. Waschmaschine nach Anspruch 1, bei der der Elektromotor ein Asynchonmotor ist, der niedrige Drehzahlwicklungen für die Waschphase und Hochdrehzahlwicklungen für die Schleuderphase enthält, **dadurch gekennzeichnet,** daß die Betätigungseinrichtung wenigstens einen Unterbrecherschalter (18) aufweist, der von der Programmeinheit betätigt wird, um einen Teil (25) der Motorwicklungen (11) für die Waschdrehzahl abzuschalten.

3. Waschmaschine nach Anspruch 2, **dadurch gekennzeichnet,** daß der Unterbrecherschalter (18) dazu eingerichtet ist, jenen Teil (25) der Wicklungen (11) kurzzuschließen.

4. Waschmaschine nach Anspruch 2, **dadurch gekennzeichnet,** daß die Motorsteuervorrichtung in Serie mit dem genannten Unterbrecherschalter (18) einen weiteren Unterbrecherschalter (19) enthält, der von der Programmeinheit gesteuert ist und dazu eingerichtet ist, in einer Endstufe der genannten Zeitdauer, die jeder Schleuderphase unmittelbar vorangeht, geschlossen zu werden.

5. Waschmaschine nach Anspruch 4, bei der der Elektromotor vom Einphasentyp ist, **dadurch gekennzeichnet,** daß die Unterbrecherschalter (18, 19) in die Motorsteuervorrichtung derart eingesetzt sind, daß sie einen Teil der Motorwicklung abtrennen.

6. Waschmaschine nach Anspruch 4, bei der der Elektromotor vom Universaltyp ist und die Programmsteuereinheit vom elektronischen Typ ist, **dadurch gekennzeichnet,** daß die Unterbrecherschalter (18, 19) elektronische Schalterelemente sind, die vorzugsweise in die Logikschaltung der elektronischen Programmeinheit eingesetzt sind.

FIG.1

FIG.2

6

FIG. 3

FIG.4

FIG.5